# EUROPÄISCHE PATENTSCHRIFT

(11) **EP 3 183 464 B1**
(45) Veröffentlichungstag und Bekanntmachung des Hinweises auf die Patenterteilung: **15.04.2020**
(21) Anmeldenummer: 15752913.2
(22) Anmeldetag: 31.07.2015
(51) Int. Cl.: F16D 13/75

(54) **DREHSCHWINGUNGSDÄMPFER**
TORSIONAL VIBRATION DAMPER
AMORTISSEUR DE VIBRATIONS DE TORSION

(30) Priorität: 21.08.2014 DE 102014216594
(43) Veröffentlichungstag der Anmeldung: 28.06.2017
(73) Patentinhaber: Schaeffler Technologies AG & Co. KG, 91074 Herzogenaurach (DE)
(72) Erfinder: HEUBERGER, Sebastian, 77815 Bühl (DE)
(86) Internationale Anmeldenummer: PCT/DE2015/200431
(87) Internationale Veröffentlichungsnummer: WO 2016/026491

(56) Entgegenhaltungen:
- DE-A1- 2 729 698
- DE-A1- 10 155 146
- DE-T2- 69 512 757
- US-A- 2 774 452
- US-A- 5 349 882

## Beschreibung

Die vorliegende Erfindung betrifft einen Drehschwingungsdämpfer gemäß dem Oberbegriff des Patentanspruchs 1. Insbesondere betrifft die Erfindung einen Drehschwingungsdämpfer mit einer Nachstelleinrichtung, insbesondere ein Einmassenschwungrad oder ein Zweimassenschwungrad mit einer Nachstelleinrichtung, mit deren Hilfe ein Nachstellen eines verschleißbedingten Fehlabstands einer Anpressplatte zu einer Gegenplatte einer Reibungskupplung eines Kraftfahrzeugs erfolgen kann.

Drehschwingungsdämpfer ist zur Dämpfung der Drehschwingungen einer Antriebswelle eines Kraftfahrzeugmotors bekannt. Beispielsweise aus DE 10 2008 004 150 A1 ist ein Zweimassenschwungrad bekannt, bei dem zur Drehschwingungsdämpfung einer Kurbelwelle eines Kraftfahrzeugverbrennungsmotors eine Primärmasse über eine Bogenfeder mit einer relativ zur Primärmasse verdrehbaren Sekundärmasse gekoppelt ist. Die Bogenfeder ist in einem Bogenfederkanal angeordnet, wobei eine Kanalwand des Bogenfederkanals durch die Primärmasse ausgebildet ist. In den Bogenfederkanal ragt ein Flansch der Sekundärmasse hinein, der über einen Reibring an der Kanalwand abgestützt ist.

Ferner ist es bekannt, dass Reibungskupplungen zum Ausgleich eines auftretenden Verschleißes von Reibbelägen mit einer kraftgesteuerten Nachstelleinrichtung versehen sind. Hier wird eine infolge eines Verschleißes ungünstige Entwicklung der Anpresskraft eines eine Gegenplatte der Reibungskupplung beaufschlagenden Betätigungssystems zur Bewegung der Anpressplatte, beispielsweise einer Tellerfeder, erfasst und abhängig von der Anpresskraft eine Nachstellung bewirkt. Alternativ kann ein bei einem Verschleiß der Reibbeläge der Kupplungsscheibe auftretender Fehlabstand zwischen dem Kupplungsgehäuse und dem Betätigungssystem ermittelt ("sensieren") und abhängig von dem Fehlabstand korrigiert werden. Zur Korrektur werden dabei zwischen der Gegenplatte und dem Betätigungssystem angeordnete Ausgleichsmittel wie Rampensysteme oder Gewinde verdreht.

Aus DE 10 2009 035 225 A1, WO 2009/056092 A1, DE 10 2011 086 995 A1 ist jeweils eine Reibungskupplung mit einer weggesteuerten Nachstelleinrichtung bekannt, bei der eine sich in Abhängigkeit vom Abstand eines Betätigungssystems mit einer Tellerfeder und einer Anpressplatte axial verlagernde Antriebsklinke eines Sensierblechs auf ein Ritzel einer Spindel wirkt, wobei eine auf der Spindel aufgenommene Spindelmutter bei Verdrehung der Spindel einen zwischen der Anpressplatte und der Tellerfeder angeordneten Rampenring eines Rampensystems relativ zu einer Gegenrampe der Anpressplatte verdreht, wodurch der ursprüngliche Abstand des Betätigungssystems zur Anpressplatte wieder hergestellt wird. Dabei gleitet während des Hubs einer Gegenplatte gegenüber der Anpressplatte die Antriebsklinke auf den Zähnen des Ritzels und rastet bei einem vorgegebenen Verschleiß in eine Zahnlücke zwischen zwei Zähnen ein. Die Antriebsklinke nimmt beim nächsten Öffnungsvorgang der Reibungskupplung das Ritzel formschlüssig mit und verdreht dabei das Ritzel und damit die Spindel, wodurch die Spindelmutter entlang der Spindel bewegt wird und den Rampenring um einen entsprechenden Winkelbetrag verdreht, um die Reibungskupplung dadurch nachzustellen. Nachstelleinrichtungen mit einem derartigen Betätigungsprinzip werden nachfolgend auch als "TAC-Spindel" bezeichnet. Der Rampenring weist eine Eingriffsöffnung auf, in die ein von der Spindelmutter abstehender Zahn eingreift, so dass bei einem Verdrehen der Spindel und einer axialen Bewegung der Spindelmutter entlang der Spindel der Zahn der Spindelmutter den Rampenring verdrehen kann. Nachstelleinrichtungen mit einem derartigen Betätigungsprinzip werden auch als "TAC-Spindel" bezeichnet.

Aus der DE 101 55 146 A1 ist ein Drehschwingungsdämpfer bekannt, der auf den Oberbegriff des Patentanspruchs 1 lesbar ist.

Es besteht ein ständiges Bedürfnis, dass eine Vorrichtung, insbesondere ein Drehschwingungsdämpfer zusätzliche Funktionen aufweist.

Aufgabe der Erfindung ist es, einen Drehschwingungsdämpfer zu schaffen, der ermöglicht, einen verschleißbedingten Fehlabstand einer Anpressplatte zu einer Gegenplatte einer Reibungskupplung eines Kraftfahrzeugs nachzustellen.

Die Lösung der Aufgabe erfolgt erfindungsgemäß durch einen Drehschwingungsdämpfer mit den Merkmalen des Anspruchs 1. Bevorzugte Ausgestaltungen der Erfindung sind in den Unteransprüchen angegeben, die jeweils einzeln oder in Kombination einen Aspekt der Erfindung darstellen können.

Erfindungsgemäß ist ein Drehschwingungsdämpfer, insbesondere ein Schwungrad vorgesehen mit einer Nachstelleinrichtung zum Nachstellen eines verschleißbedingten Fehlabstands einer Anpressplatte zu einer Gegenplatte einer Reibungskupplung eines Kraftfahrzeugs.

Wie oben erwähnt ist die Nachstelleinrichtung zum Nachstellen eines verschleißbedingten Fehlabstands einer Anpressplatte zu einer Gegenplatte einer Reibungskupplung eines Kraftfahrzeugs bekannt. Bei der bekannten Kupplung ist die Nachstelleinrichtung auf Seiten der Anpressplatte, wie z.B. zwischen der Anpressplatte und der Tellerfeder oder zwischen der Tellerfeder und dem Kupplungsdeckel angeordnet.

Der erfindungsgemäße Gedanke ist darin zu sehen, dass eine Nachstelleinrichtung nicht auf Seiten der Anpressplatte, sondern auf Seiten der Gegenplatte, insbesondere in einem Drehschwingungsdämpfer angeordnet ist. Der Drehschwingungsdämpfer kann beispielsweise als Einmassenschwungrad oder Zweimassenschwungrad ausgestaltet sein.

Das Einmassenschwungrad kann mit einer Schwungscheibe, einem Deckel und mindestens einem zwischen der Schwungscheibe und dem Deckel angeordneten Reibring versehen sein. Der Reibring kann beispielsweise als Gusselement oder Stahlelement ausgeführt sein. Um bei dem Stahlreibring genügend Masse zu generieren können mehrere Reibringe miteinander verbunden sein. Die Verbindung zwischen den Ringen kann beispielsweise durch Nieten oder Schweißen erfolgen. Es ist ebenfalls möglich, eine dünne Schicht aus Aluminium auf dem Reibring zu verwenden, um die Wärmeübergang zu fördern. Die Reibringe können aus unterschiedlichen Materialien ausgebildet sein, wobei mindestens ein Reibring über Blattfedern an der Schwungscheibe befestigt ist. Eine Nachstelleinrichtung kann beispielsweise zwischen der Schwungscheibe und dem Reibring eingesetzt werden. Beim Nachstellen kann der Reibring von der Nachstelleinrichtung in axialer Richtung bewegt werden. Der Reibring kann unmittelbar an der Gegenplatte angeordnet sein und durch seine Bewegung die Gegenplatte versetzen. Es ist auch möglich, dass die Gegenplatte der Reibungskupplung aus dem Reibring ausgestaltet ist. Ein verschleißbedingter Fehlabstand einer Anpressplatte zu der Gegenplatte einer Reibungskupplung kann durch das Versetzen der Gegenplatte nachgestellt werden.

Die Nachstelleinrichtung ist mit einem in Umfangsrichtung verdrehbaren Rampenring versehen, wobei der Rampenring mehrere in axialer Richtung abstehende Rampen aufweist. Beispielsweise kann der Rampenring zwischen einer Schwungscheibe und einem Reibring oder zwischen dem Reibring und einem Deckel des Drehschwingungsdämpfers angeordnet sein. Insbesondere können die Rampen im Wesentlichen identisch zueinander ausgebildet und in Umfangsrichtung gleichmäßig verteilt sein. Durch die identische Ausbildung und die gleichmäßige Verteilung der Rampen kann ein Verschleiß aufgrund ungleichmäßiger Bauteilbelastungen vermieden werden.

Vorzugsweise kann der Drehschwingungsdämpfer ein Bauteil, insbesondere eine Schwungscheibe oder einen Reibring zur Ausbildung eines Gegenlagers für die Rampen des Rampenrings aufweisen, wobei das Bauteil mehrere in axialer Richtung abstehende Gegenrampen aufweisen kann. Vorteilhaft können die Gegenrampen direkt aus der Schwungscheibe ausgeformt sein. Es ist auch möglich, dass die Gegenrampen an dem Reibring oder dem Deckel angeordnet sind. Insbesondere können die Gegenrampen im Wesentlichen identisch zueinander ausgebildet und in Umfangsrichtung gleichmäßig verteilt sein. Vorteilhaft kann die Anzahl der Gegenrampen der Anzahl der Rampen des Rampenrings entsprechen.

Zum Verdrehen des Rampenrings relativ zum Bauteil ist die Nachstelleinrichtung mit einer an dem Rampenring angreifenden Verstelleinheit versehen. Die Verstelleinheit kann beispielsweise an der Schwungscheibe befestigt sein. Es ist auch möglich, die Verstelleinheit an dem Reibring oder dem Deckel zu befestigen.

Es ist ferner vorgesehen, dass die Verstelleinheit als eine weggesteuerte Verstelleinheit ausgestaltet sein kann. Vorzugsweise kann die Verstelleinheit als Spindelsystem ausgestaltet sein. Das Spindelsystem weist eine auf eine Spindel aufgeschraubte Spindelmutter zum Verdrehen des Rampenrings und ein drehfest mit der Spindel verbundenes Ritzel auf, wobei das Ritzel von einer in den Umfang des Ritzels eingreifbaren Antriebsklinke verdrehbar ist.

Vorteilhaft kann die Antriebsklinke an einer Antriebsfeder angeordnet sein, wobei die Antriebsfeder von einem Kupplungsteil, insbesondere von der Anpressplatte, bewegbar sein kann. Während einer Bewegung der Anpressplatte zu einer Gegenplatte wird die Antriebsfeder von der Anpressplatte so gedrückt, dass die Antriebsklinke auf den Zähnen des Ritzels gleitet und bei einem vorgegebenen Verschleiß in eine Zahnlücke zwischen zwei Zähnen einrastet. Die Antriebsklinke nimmt beim nächsten Öffnungsvorgang der Reibungskupplung das Ritzel formschlüssig mit und verdreht dabei das Ritzel und damit die Spindel, wodurch die Spindelmutter entlang der Spindel bewegt wird und den Rampenring um einen entsprechenden Winkelbetrag verdreht, um die Reibungskupplung dadurch nachzustellen. Die weggesteuerte Verstelleinheit kann insbesondere im Übrigen wie in DE 10 2009 035 225 A1, WO 2009/056092 A1 oder DE 10 2011 086 995 A1 beschrieben aus- und weitergebildet sein, auf deren Inhalt als Teil der Erfindung hiermit verwiesen wird.

Eine weitere Variante der Erfindung ist darin zu sehen, dass die Verstelleinheit als eine kraftgesteuerte Verstelleinheit ausgestaltet sein kann.

Vorteilhaft kann die kraftgesteuerte Verstelleinheit mit einer an dem Rampenring mit einer im Wesentlichen in tangentialer Richtung angreifenden Vorschubkraft angreifenden Vorschubfeder zum Verdrehen des Rampenrings und einer an dem Rampenring angreifbaren Klemmfeder zum reibschlüssigen Arretieren des Rampenrings versehen sein, wobei eine von der Klemmfeder auf den Rampenring aufbringbare Klemmkraft in Abhängigkeit vom Hubweg der Anpressplatte veränderbar ist. Die kraftgesteuerte Verstelleinheit kann insbesondere im Übrigen wie in WO 2008/058508 A1 beschrieben aus- und weitergebildet sein, auf deren Inhalt als Teil der Erfindung hiermit verwiesen wird.

Nachfolgend wird die Erfindung unter Bezugnahme auf die anliegenden Zeichnungen anhand bevorzugter Ausführungsbeispiele exemplarisch erläutert, wobei die nachfolgend dargestellten Merkmale sowohl jeweils einzeln als auch in Kombination einen Aspekt der Erfindung darstellen können. Es zeigen:
Fig. 1: eine Explosionsdarstellung eines Drehschwingungsdämpfers in einer ersten Ausführungsform der Erfindung,
Fig. 2: eine Explosionsdarstellung eines Drehschwingungsdämpfers in einer zweiten Ausführungsform der Erfindung,
Fig. 3: eine schematische Schnittansicht einer Reibungskupplung mit einem Drehschwingungsdämpfer aus Fig. 2,
Fig. 4: eine vergrößerte Ansicht des in Fig. 3 mit III markierten Bereiches, und
Fig. 5: eine perspektivische Ansicht einer Verstelleinheit des Drehschwingungsdämpfers der Erfindung.

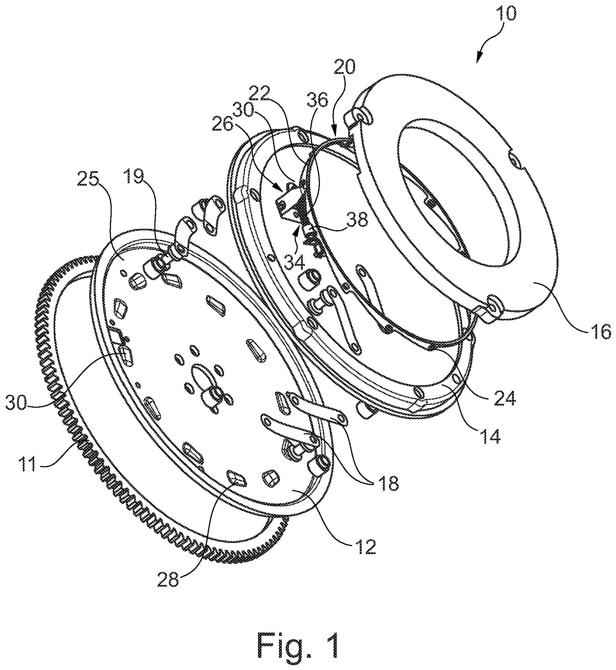

Fig.1 zeigt eine Explosionsdarstellung eines Drehschwingungsdämpfers in einer ersten Ausführungsform der Erfindung. Der Drehschwingungsdämpfer 10 weist einen Anlasserzahnkranz 11 und eine Schwungscheibe 12 auf, mit der ein Deckel 14 verbunden ist. In dem Deckel 14 ist ein Reibring 16 angeordnet. Der Reibring 16 ist mit Hilfe von mehreren Blattfedern 18 auf der Schwungscheibe 12 befestigt. Die Blattfedern 18 sind mit Hilfe von Nieten 19 auf der Schwungscheibe 12 und dem Reibring 16 befestigt. Durch die Verbindung über die Blattfeder 18 kann der Reibring sich 16 in axialer Richtung des Drehschwingungsdämpfers 10 eingeschränkt bewegen. Zum Nachstellen eines verschleißbedingten Fehlabstands einer Anpressplatte zu einer Gegenplatte einer Reibungskupplung eines Kraftfahrzeugs ist der Drehschwingungsdämpfer 10 mit einer Nachstelleinrichtung 20 versehen. Die Nachstelleinrichtung 20 weist einen in Umfangsrichtung verdrehbaren Rampenring 22 auf, wobei der Rampenring 22 mit mehreren in axialer Richtung abstehenden Rampen 24 versehen ist. In diesem Ausführungsbeispiel ist der Rampenring 22 zwischen der Schwungscheibe 12 und dem Reibring 16 angeordnet. Zur Ausbildung eines Gegenlagers für die Rampen 24 des Rampenrings 22 ist ein Bauteil 25 vorgesehen. In diesem Ausführungsbeispiel handelt es sich bei dem Bauteil 25 um die Schwungscheibe 12. Die Schwungscheibe 12 weist mehrere in axialer Richtung abstehende Gegenrampen 28 auf. Wie in Fig. 1 gezeigt sind die Gegenrampen 28 in diesem Ausführungsbeispiel als aus der Schwungscheibe 12 in axialer Richtung herausragende Vorsprünge 30 ausgebildet. Die Vorsprünge 30 sind im Wesentlichen identisch zueinander ausgebildet und in Umfangsrichtung gleichmäßig verteilt.

Ferner ist die Nachstelleinrichtung 20 mit einer an dem Rampenring 22 angreifenden Verstelleinheit 26 zum Verdrehen des Rampenrings 22 relativ zur Schwungscheibe 12 versehen. In diesem Ausführungsbeispiel handelt es sich bei der Verstelleinheit 26 um eine weggesteuerte Verstelleinheit 32. Diese weggesteuerte Verstelleinheit 32 ist als Spindelsystem 34 ausgestaltet. Wie in Fig. 1 gezeigt weist das Spindelsystem 34 eine auf eine Spindel 36 aufgeschraubte Spindelmutter 38 zum Verdrehen des Rampenrings 22 und ein drehfest mit der Spindel 36 verbundenes Ritzel 40 auf. Das Ritzel 40 kann von einer in den Umfang des Ritzels 40 eingreifbaren Antriebsklinke 42 verdreht werden. Die Antriebsklinke 42 ist an einer Antriebsfeder 44 angeordnet.

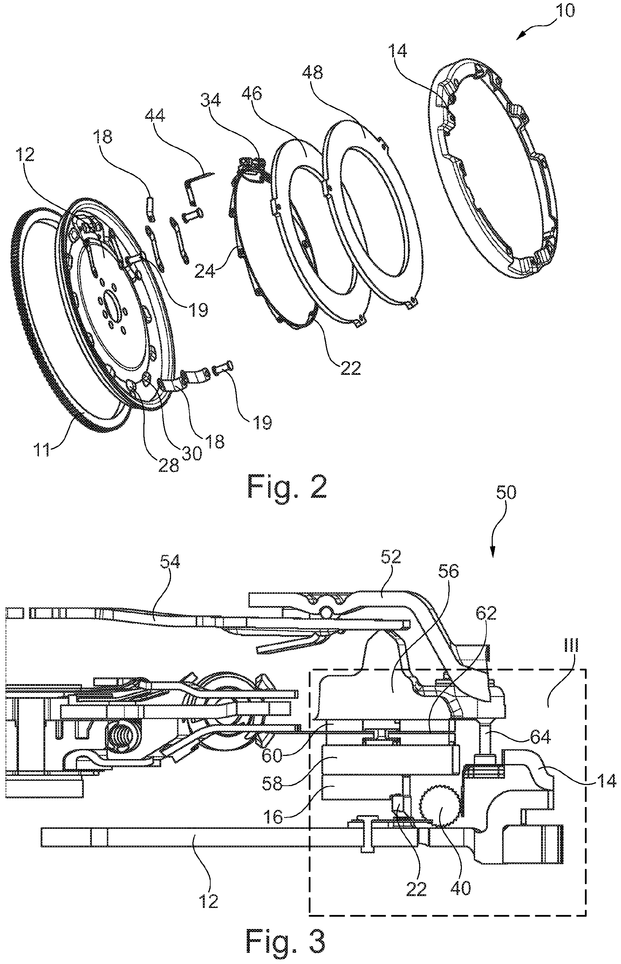

Fig. 2 zeigt eine Explosionsdarstellung eines Drehschwingungsdämpfers in einer zweiten Ausführungsform der Erfindung. Der Unterschied zwischen den Drehschwingungsdämpfern 10 aus Fig. 1 und Fig. 2 ist darin zu sehen, dass der in Fig. 2 gezeigte Drehschwingungsdämpfer 10 einen ersten Reibring 46 und einen zweiten Reibring 48 aufweist, während der in Fig. 1 gezeigte Drehschwingungsdämpfer 10 nur mit einem Reibring 16 versehen ist. Die beiden Reibringe 46, 48 sind unmittelbar aufeinander angeordnet.

Fig. 3 zeigt eine schematische Schnittansicht einer Reibungskupplung 50 mit einem Drehschwingungsdämpfer 10 aus Fig. 2. Die Reibungskupplung 50 weist einen Kupplungsdeckel 52 und eine mit Hilfe einer Tellerfeder 54 axial bewegbare Anpressplatte 56 auf, die mit Hilfe der Tellerfeder 54 auf einer Gegenplatte 58 bewegt werden kann, um eine mit Reibbelägen 60 versehene Kupplungsscheibe 62 zwischen der Anpressplatte 56 und der Gegenplatte 58 zum Schließen der Reibungskupplung 50 zu verpressen. Diese Reibungskupplung 50 ist ferner mit einem Drehschwingungsdämpfer 10 aus Fig. 2 versehen. Der Drehschwingungsdämpfer 10 weist einen Anlasserzahnkranz 11 und eine Schwungscheibe 12 auf, mit der ein Deckel 14 verbunden ist. In dem Deckel 14 sind ein erster Reibring 46 und ein zweiter Reibring 48 angeordnet. Die beiden Reibringe 46, 48 sind unmittelbar aufeinander angeordnet. In diesem Ausführungsbeispiel dient der zweite Reibring 48 als Gegenplatte 58. Zum Nachstellen eines verschleißbedingten Fehlabstands der Anpressplatte 56 zu der Gegenplatte 58 ist der Drehschwingungsdämpfer 10 mit einer Nachstelleinrichtung 20 versehen. Die Nachstelleinrichtung 20 weist einen in Umfangsrichtung verdrehbaren Rampenring 22 auf, wobei der Rampenring 22 mit mehreren in axialer Richtung abstehenden Rampen 24 versehen ist. In diesem Ausführungsbeispiel ist der Rampenring 22 zwischen der Schwungscheibe 12 und dem ersten Reibring 46 angeordnet. Die Schwungscheibe 12 weist mehrere in axialer Richtung abstehende Gegenrampen 28 auf. Zum Verdrehen des Rampenrings 22 relativ zur Schwungscheibe 12 ist die Nachstelleinrichtung 20 mit einer an dem Rampenring 22 angreifenden Verstelleinheit 26 versehen. In diesem Ausführungsbeispiel ist diese Verstelleinheit 32 als Spindelsystem 34 ausgestaltet. Das Spindelsystem 34 weist eine auf eine Spindel 36 aufgeschraubte Spindelmutter 38 zum Verdrehen des Rampenrings 22 und ein drehfest mit der Spindel 36 verbundenes Ritzel 40 auf. Das Ritzel 40 kann von einer in den Umfang des Ritzels 40 eingreifbaren Antriebsklinke 42 verdreht werden. Die Antriebsklinke 42 ist an einer Antriebsfeder 44 angeordnet. Die Antriebsfeder 44 kann von der Anpressplatte 56 betätigt werden.

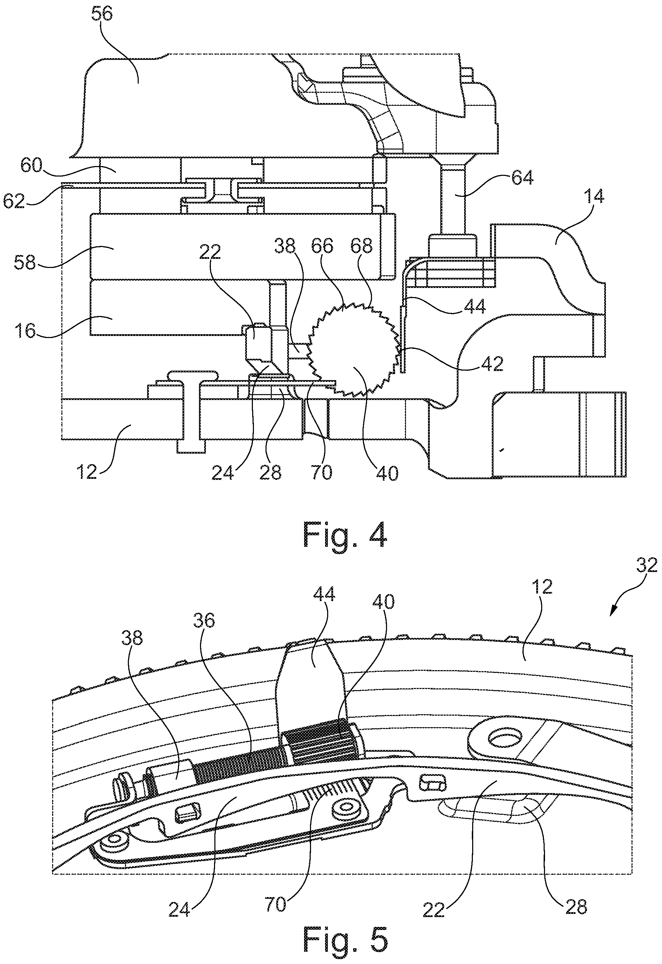

Fig. 4 zeigt eine vergrößerte Ansicht des in Fig. 3 mit III markierten Bereiches. Wie in Fig. 4 gezeigt ist die Antriebsfeder 44 durch eine Verbindungssäule 64 mit der Anpressplatte 56 verbunden. Während einer Bewegung der Anpressplatte 56 zu einer Gegenplatte 58 wird die Antriebsfeder 44 von der Anpressplatte 56 so gedrückt, dass die Antriebsklinke 42 auf den Zähnen 66 des Ritzels 40 gleitet und bei einem vorgegebenen Verschleiß in eine Zahnlücke 68 zwischen zwei Zähnen 66 einrastet. Die Antriebsklinke 42 nimmt beim nächsten Öffnungsvorgang der Reibungskupplung 50 das Ritzel 40 formschlüssig mit und verdreht dabei das Ritzel 40 und damit die Spindel 36, wodurch die Spindelmutter 38 entlang der Spindel 36 bewegt wird und den Rampenring 22 um einen entsprechenden Winkelbetrag verdreht, um die Reibungskupplung 50 dadurch nachzustellen. Wie anhand von Fig. 4 ferner zu erkennen ist, ist eine in den Umfang des Ritzels 40 eingreifende und auf der Schwungscheibe 12 befestigte Sperrklinke 70 vorgesehen, die eine unbeabsichtigte Rückdrehung des Ritzels 40 sperrt.

Fig. 5 zeigt eine perspektivische Ansicht einer Verstelleinheit 32 des Drehschwingungsdämpfers 10 der Erfindung. Diese Verstelleinheit 32 ist als Spindelsystem 34 ausgestaltet. Das Spindelsystem 34 weist eine Spindel 36 auf, die mit Hilfe eines mit der Spindel 36 verbundenen Ritzels 40 angetrieben werden kann. Durch die Drehung der Spindel 36 kann eine auf der Spindel 36 aufgeschraubte Spindelmutter 38 entlang der Spindel 36 bewegt werden. Die Spindelmutter 38 ist mit dem Rampenring 22 formschlüssig verbunden, um durch die Bewegung der Spindelmutter 38 den Rampenring 22 relativ zur Schwungscheibe 12 zu verdrehen. Hierzu kann eine Antriebsklinke 42 in das mit der Spindel 36 verbundene Ritzel 40 formschlüssig eingreifen und bei einem hinreichend großen Fehlabstand der Anpressplatte 56 zur Gegenplatte 58 das Ritzel 40 verdrehen. In diesem Ausführungsbeispiel ist ferner eine in den Umfang des Ritzels 40 eingreifende und auf der Schwungscheibe 12 befestigte Sperrklinke 70 vorgesehen, die eine unbeabsichtigte Rückdrehung des Ritzels 40 sperrt. Das Spindelsystem 34 ist durch Nieten 19 auf der Schwungscheibe 12 befestigt.

### Bezugszeichenliste

- 10: Drehschwingungsdämpfer
- 11: Anlasserzahnkranz
- 12: Schwungscheibe
- 14: Deckel
- 16: Reibring
- 18: Blattfeder
- 19: Nieten
- 20: Nachstelleinrichtung
- 22: Rampenring
- 24: Rampen
- 25: Bauteil
- 26: Verstelleinheit
- 28: Gegenrampen
- 30: Vorsprünge
- 32: weggesteuerte Verstelleinheit
- 34: Spindelsystem
- 36: Spindel
- 38: Spindelmutter
- 40: Ritzel
- 42: Antriebsklinke
- 44: Antriebsfeder
- 46: erster Reibring
- 48: zweiter Reibring
- 50: Reibungskupplung
- 52: Kupplungsdeckel
- 54: Tellerfeder
- 56: Anpressplatte
- 58: Gegenplatte
- 60: Reibbelag
- 62: Kupplungsscheibe
- 64: Verbindungssäule
- 66: Zähne
- 68: Zahnlücke
- 70: Sperrklinke

## Patentansprüche

1. Drehschwingungsdämpfer, insbesondere Einmassenschwungrad oder Zweimassenschwungrad, mit einer Nachstelleinrichtung (20) zum Nachstellen eines verschleißbedingten Fehlabstands einer Anpressplatte (56) zu einer Gegenplatte (58) einer Reibungskupplung (50) eines Kraftfahrzeugs, wobei die Nachstelleinrichtung (20) mit einem in Umfangsrichtung verdrehbaren Rampenring (22), der mehrere in axialer Richtung abstehende Rampen (24) aufweist, und einer am Rampenring (22) angreifenden, weggesteuerten Verstelleinheit (26) zum Verdrehen des Rampenrings (22) relativ zu einem Bauteil (25) des Drehschwingungsdämpfers versehen ist, **dadurch gekennzeichnet, dass** die weggesteuerte Verstelleinheit (26) als Spindelsystem (34) ausgestaltet ist, das eine auf einer Spindel (36) aufgeschraubte Spindelmutter (38) zum Verdrehen des Rampenrings (22) und ein drehfest mit der Spindel (36) verbundenes Ritzel (40) aufweist, wobei das Ritzel (40) von einer in den Umfang des Ritzels (40) eingreifbaren Antriebsklinke (42) verdrehbar ist.

2. Drehschwingungsdämpfer nach Anspruch 1, **dadurch gekennzeichnet, dass** das Bauteil (25) als Schwungscheibe (12) oder als Reibring (16) zur Ausbildung eines Gegenlagers für die Rampen (24) des Rampenrings (22) vorgesehen ist, wobei das Bauteil (25) mehrere in axialer Richtung abstehende Gegenrampen (28) aufweist.

3. Drehschwingungsdämpfer nach Anspruch 1 oder 2, **dadurch gekennzeichnet, dass** die Antriebsklinke (42) an einer Antriebsfeder (44) angeordnet ist, wobei die Antriebsfeder (44) von einem Kupplungsteil, insbesondere von der Anpressplatte (56), bewegbar ist.

## Claims

1. A torsional vibration damper, in particular a single-mass flywheel or dual-mass flywheel, with an adjustment device (20) for adjusting a wear-related incorrect spacing between a pressure plate (56) and a counter plate (58) of a friction clutch (50) of a motor vehicle, the adjustment device (20) having a ramp ring (22) which can be rotated in the circumferential direction, which has a plurality of ramps (24) projecting in the axial direction, and is provided with a displacement-controlled adjustment unit (26) which engages the ramp ring (22) for rotating the ramp ring (22) relative to a component (25) of the torsional vibration damper, **characterised in that** the displacement-controlled adjustment unit (26) is designed as a spindle system (34), which has a spindle nut (38) screwed onto a spindle (36) for rotating the ramp ring (22) and a pinion (40) connected to the spindle (36) in a rotationally fixed manner, wherein the pinion (40) is rotatable by a drive pawl (42) that is engageable in the circumference of the pinion (40).

2. The torsional vibration damper according to claim 1, **characterised in that** the component (25) is provided as a flywheel (12) or as a friction ring (16) to form a counter bearing for the ramps (24) of the ramp ring (22), the component (25) having a plurality of counter ramps (28) projecting in the axial direction.

3. The torsional vibration damper according to claim 1 or 2, **characterised in that** the drive pawl (42) is arranged on a drive spring (44), the drive spring (44) being movable by a coupling part, in particular by the pressure plate (56).

## Revendications

1. Amortisseur de vibrations de torsion, en particulier un volant d'inertie à une masse ou un volant d'inertie à deux masses, comprenant un dispositif de rattrapage (20) pour rattraper un défaut d'écartement lié à l'usure d'un plateau de pression (56) par rapport à un plateau de réaction (58) d'un embrayage à friction (50) d'un véhicule automobile, le dispositif de rattrapage (20) comprenant une bague à rampes (22) mobile en rotation dans le sens circonférentiel, qui comprend une pluralité de rampes (24) faisant saillie dans la direction axiale, et étant pourvu d'une unité de réglage à trajectoire contrôlée (26) qui vient en prise avec la bague à rampes (22) pour faire tourner la bague à rampes (22) par rapport à un élément (25) de l'amortisseur de vibrations de torsion, **caractérisé en ce que** l'unité de réglage (26) à trajectoire contrôlée est conçue comme un système de broche (34) qui présente un écrou de broche (38) vissé sur une broche (36) pour faire tourner la bague à rampes (22) et un pignon (40) relié à la broche (36) de manière fixe en rotation, le pignon (40) étant entraîné à rotation par un cliquet d'entraînement (42) qui peut venir en prise dans la circonférence du pignon (40).

2. Amortisseur de vibrations de torsion selon la revendication 1, **caractérisé en ce que** l'élément (25) est prévu comme volant d'inertie (12) ou comme bague de friction (16) pour former un contre-palier pour les rampes (24) de la bague à rampes (22), l'élément (25) comprenant une pluralité de contre-rampes (28) faisant saillie dans la direction axiale.

3. Amortisseur de vibrations de torsion selon la revendication 1 ou 2, **caractérisé en ce que** le cliquet d'entraînement (42) est disposé sur un ressort d'entraînement (44), le ressort d'entraînement (44) étant mobile par une pièce d'accouplement, notamment par le plateau de pression (56).
